(19) Europäisches Patentamt European Patent Office Office européen des brevets

(11) **EP 3 688 630 B1**

(12) **FASCICULE DE BREVET EUROPEEN**

(45) Date de publication et mention de la délivrance du brevet:
**27.08.2025  Bulletin 2025/35**

(21) Numéro de dépôt: **18788817.7**

(22) Date de dépôt: **25.09.2018**

(51) Classification Internationale des Brevets (IPC):
**G06F 30/15** *(2020.01)*    **G06F 30/23** *(2020.01)*
**G06F 119/18** *(2020.01)*

(52) Classification Coopérative des Brevets (CPC):
**G06F 30/23; G06F 30/15;** G06F 2119/18;
Y02P 90/02

(86) Numéro de dépôt international:
**PCT/FR2018/052355**

(87) Numéro de publication internationale:
**WO 2019/058085 (28.03.2019 Gazette 2019/13)**

(54) **ETABLISSEMENT D'UNE SPECIFICATION DE DIMENSIONNEMENT D'UN EQUIPEMENT POUR STRUCTURE DE TURBOMACHINE**

**FESTLEGUNG EINER SPEZIFIKATION AUF DESIGNBASIS FÜR EINE VORRICHTUNG FÜR EINE TURBOMASCHINENSTRUKTUR**

**ESTABLISHMENT OF A DESIGN-BASIS SPECIFICATION FOR A DEVICE FOR A TURBOMACHINE STRUCTURE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **25.09.2017  FR 1758822**

(43) Date de publication de la demande:
**05.08.2020  Bulletin 2020/32**

(73) Titulaire: **Safran Aircraft Engines**
**75015 Paris (FR)**

(72) Inventeurs:
• **LEYNAUD, Robin**
**77550 Moissy-Cramayel (FR)**
• **BENYAMIN, Serge**
**77550 Moissy-Cramayel (FR)**
• **PERRON, Nicolas**
**77550 Moissy-Cramayel (FR)**
• **PETARD, Benjamin**
**77550 Moissy-Cramayel (FR)**
• **POINSOT-BERTHELOT, Florian**
**77550 Moissy-Cramayel (FR)**

(74) Mandataire: **Cabinet Beau de Loménie**
**103, rue de Grenelle**
**75340 Paris Cedex 07 (FR)**

(56) Documents cités:
• **W. SHERIDAN ET AL: "Design Optimization Study of Isolation Mount Systems for Gas Turbine Engine Accessories", PROCEEDINGS OF GT2005. ASME TURBO EXPO 2005 : POWER FOR LAND, SEA AND AIR. RENO-TAHOE, JUNE 6-9 2005, 2005, pages 361 - 371, XP055481238, ISBN: 978-0-7918-4727-5, DOI: 10.1115/ GT2005-68048**

## Description

### DOMAINE DE L'INVENTION

Le présent exposé concerne le domaine général du dimensionnement d'équipements, et plus particulièrement un procédé de fabrication d'un équipement pour turbomachine, basé sur l'établissement d'une spécification de dimensionnement de l'équipement.

### ARRIÈRE-PLAN TECHNOLOGIQUE

Lors du développement d'une turbomachine, par exemple dans le domaine de l'aéronautique, la conception des structures de la turbomachine et la conception des équipements destinés à être montés sur ces structures sont généralement réalisées par des équipes différentes. L'équipe en charge de la dynamique d'ensemble d'une structure, telle que la nacelle ou le carter de la turbomachine, fournit à l'équipe en charge du dimensionnement d'un équipement une spécification, appelée spécification de dimensionnement, qui définit les efforts ou déplacements auxquels doit résister l'équipement. Ainsi, la spécification de dimensionnement est supposée représentative des conditions auxquelles sera soumis l'équipement pendant le fonctionnement de la turbomachine.

Classiquement, au moins les événements les plus sévères susceptibles de se produire dans la turbomachine sont pris en compte dans la spécification. Pour chaque événement, la spécification comprend un équivalent statique de l'accélération maximale de la structure au point où l'équipement est destiné à être attaché. L'équipe en charge du dimensionnement de l'équipement, aussi appelée équipementier, peut alors appliquer cette accélération équivalente à son équipement et dimensionner ce dernier afin d'en optimiser la tenue.

Toutefois, une telle méthode est basée sur des calculs statiques à partir d'une donnée dynamique telle que l'accélération. Cette méthode induit donc des marges importantes sur le dimensionnement, n'est pas représentative des phénomènes physiques réels et ne prend en compte ni les couplages entre la structure et l'équipement, ni les différentes phases possibles d'un incident. Afin de pouvoir dimensionner au plus juste les équipements et diminuer leur masse, il existe donc un besoin pour un nouveau type de procédé d'établissement d'une spécification.

Par ailleurs, W. Sheridan et al : « Design optimization study of isolation mount systems for gas turbine engine accessories », Proceedings of GT2005, ASME Turbo expo 2005 : Power for land, sea and air, RENO-TAHOE, 6-9 juin 2005, pages 361-371, XP055481238, DOI : 10.1115/GT2005-68048, ISBN : 970-0-7918-4727-5, décrit un procédé d'optimisation de la conception d'une structure de montage d'un équipement. Cet article simule le balourd résultant de l'aube manquante lors d'un accident de perte d'aube de soufflante.

## PRÉSENTATION DE L'INVENTION

A cet effet, le présent exposé concerne un procédé de fabrication d'un équipement destiné à être monté sur une structure de turbomachine telle qu'un carter, tel que défini à la revendication 1.

La structure peut être, en tout ou partie, une nacelle, un carter, etc. L'élément de rotor peut être une aube, notamment de soufflante ou de turbine. Le point d'attache est le point de la structure auquel l'équipement est destiné à être attaché.

On appelle incident susceptible de se produire sur la structure un événement transitoire susceptible de se produire sur la turbomachine, et dont les conséquences directes ou indirectes impacteraient la structure, par exemple sur un plan mécanique.

Au lieu de déterminer simplement l'accélération maximale en un point de la structure, le présent procédé comprend l'étape de simulation, dans laquelle la présence de l'équipement est prise en compte sous la forme d'un oscillateur mécanique ayant au moins une fréquence propre et au moins un taux d'amortissement. Le taux d'amortissement peut être nul ou non-nul. Par exemple, l'oscillateur mécanique peut être un oscillateur harmonique amorti. Par exemple, l'oscillateur mécanique peut être un système masse-ressort amorti à un degré de liberté.

On comprend que la spécification comprend une pluralité d'accélérations de dimensionnement pour un même point d'attache : si une seule valeur de fréquence propre est considérée, alors la spécification comprend les accélérations de dimensionnement pour au moins deux valeurs de taux d'amortissement, et vice versa.

L'incident comprend un choc sur la structure, voire est un choc sur la structure. Un choc est un transitoire court et violent. Par exemple, un choc peut être modélisé par une fonction créneau ou un demi-sinus. Le choc peut être dû à l'impact de l'élément de rotor perdu, par exemple une aube, sur la structure. Un choc induit une réponse de la structure, et donc de l'équipement, essentiellement à haute fréquence. Ainsi, dans certains modes de réalisation, la valeur maximale de fréquence propre prise pour l'équipement peut être supérieure ou égale à 200 Hertz, de préférence à 400 Hertz, de préférence encore à 600 Hertz, de préférence encore à 800 Hertz, de préférence encore à 1 kiloHertz, de préférence encore à 2 kiloHertz, de préférence encore à 5 kiloHertz, de préférence encore à 10 kiloHertz.

En déterminant une accélération de dimensionnement de l'oscillateur mécanique en réponse au choc pour au moins deux valeurs de la fréquence propre et/ou du taux d'amortissement, le présent procédé permet de prendre en compte la réponse dynamique de l'équipement, modélisé sous forme d'oscillateur, et le couplage entre l'équipement et la structure, et ce sans augmenter significativement le temps de calcul nécessaire. Une telle spécification ayant été établie, l'équipementier dispose, en chaque point d'attache, non plus d'une seule valeur d'accélération mais d'une pluralité d'accélérations de dimensionnement, en fonction de la fréquence propre et/ou du taux d'amortissement. L'équipementier peut donc concevoir l'équipement et modifier sa fréquence propre et/ou son taux d'amortissement de manière à minimiser le chargement qui lui est appliqué et, par suite, optimiser la masse de l'équipement.

Ainsi, le présent procédé propose un changement de paradigme dans la conception et l'échange d'informations entre l'équipe en charge de la dynamique d'ensemble de la structure et l'équipementier.

Dans certains modes de réalisation, la détermination de l'accélération de dimensionnement est réalisée par simulation numérique. La structure peut être modélisée, ainsi que l'oscillateur mécanique, puis on simule le choc et on observe la réponse, pour plusieurs valeurs de la fréquence propre et/ou du taux d'amortissement de l'oscillateur.

Dans certains modes de réalisation, la détermination de l'accélération de dimensionnement est réalisée au moyen de capteurs, lors d'un essai réel dudit incident sur la structure. Le capteur peut être un accéléromètre. De tels modes de réalisation sont plus coûteux mais fournissent des résultats plus réalistes.

Dans certains modes de réalisation, avant la détermination des accélérations de dimensionnement, la structure est partitionnée en une pluralité de zones et le procédé comprend la détermination des accélérations de dimensionnement dans au moins deux zones de ladite pluralité. La partition de la structure peut être effectuée de sorte que la structure présente, au sein de chaque zone, une réponse homogène au choc. Une zone peut être annulaire autour de l'axe de la turbomachine. A l'extrême, une zone peut correspondre à un point unique ; dans ce cas, chaque zone est un point d'attache. Selon un exemple, la structure peut être partitionnée en zones dans le sens axial et/ou radial. Le fait de partitionner la structure en zones permet d'étudier l'impact de l'incident pour plusieurs positions envisagées de l'équipement et de donner ces informations à l'équipementier, l'équipementier pouvant alors choisir la position la plus favorable pour la tenue de l'équipement.

Au sens du présent exposé, on appelle axe de la turbomachine, l'axe de rotation des rotors de la turbomachine. La direction axiale correspond à la direction de l'axe de la turbomachine et une direction radiale est une direction perpendiculaire à cet axe et coupant cet axe. De même, un plan axial est un plan contenant l'axe de la turbomachine et un plan radial est un plan perpendiculaire à cet axe. Une circonférence s'entend comme un cercle appartenant à un plan radial et dont le centre appartient à l'axe de la turbomachine. Une direction tangentielle, circonférentielle ou azimutale est une direction tangente à une circonférence ; elle est perpendiculaire à l'axe de la turbomachine mais ne passe pas par l'axe.

Dans certains modes de réalisation, l'accélération de dimensionnement est une accélération maximale de l'oscillateur, prise sur tous les azimuts possibles du point d'attache, en réponse au choc, éventuellement augmentée d'une marge prédéterminée. Les coordonnées axiale et radiale du point d'attache peuvent être fixées. De préférence, l'accélération de dimensionnement est supérieure ou égale à l'accélération maximale.

L'incident pouvant généralement survenir selon une symétrie de révolution, la prise en compte de l'accélération maximale sur tous les azimuts possibles du point d'attache, c'est-à-dire du maximum, sur lesdits azimuts, des accélérations, éventuellement augmentée d'une marge prédéterminée, permet de fournir une donnée conservative dans la spécification.

Dans certains modes de réalisation, l'accélération de dimensionnement ou l'accélération maximale est une accélération radiale. En effet, les inventeurs ont constaté que, pour les incidents les plus sévères, les accélérations les plus critiques étaient radiales, les accélérations tangentielle et axiale étant moins significatives pour le dimensionnement de l'équipement.

Dans certains modes de réalisation, la masse de l'équipement est inférieure ou égale à 10% de la masse de la structure, de préférence 5%, de préférence encore 2%, de préférence encore 1%. Par exemple, la masse de l'équipement peut être suffisamment faible pour que quelle que soit sa fréquence propre, l'accélération au point d'attache ne diffère pas de plus de 10% entre le cas où l'équipement est présent et le cas où l'équipement est absent. Dans ces modes de réalisation, il est raisonnable de supposer que la présence de l'équipement ne modifie pas la dynamique d'ensemble de la structure et de ne pas prendre en compte la masse de l'équipement, autrement que dans l'oscillateur mécanique de manière implicite, lors de la détermination de l'accélération de dimensionnement. Cela simplifie les calculs et rend le procédé plus simple et plus rapide à mettre en œuvre. En outre, les équipements relativement légers sont plus sensibles aux phénomènes à haute fréquence, typiquement supérieure à 1 kiloHertz, qu'à basse fréquence.

Le présent exposé concerne également un procédé, non revendiqué en soi, de dimensionnement d'un équipement destiné à être monté sur une structure de turbomachine telle qu'un carter, le procédé comprenant l'obtention d'une première spécification établie par le procédé précédemment décrit et le dimensionnement de l'équipement sur la base de ladite première spécification.

Au sens du présent exposé et sauf indication contraire, la mention d'un « premier » élément, tel qu'une première spécification, n'implique pas nécessairement l'existence d'un « deuxième » élément ni, le cas échéant, de relation d'ordre entre le premier et le deuxième élément. Les qualificatifs ordinaux sont, dans ce contexte, employés à des seules fins de clarté et d'identification, sans préjuger de caractéristiques particulières.

Concernant le procédé de dimensionnement, dans certains modes de réalisation, au cours du procédé d'établissement de la première spécification, la détermination de l'accélération de dimensionnement est réalisée par simulation numérique, et le procédé de dimensionnement comprend en outre la fabrication d'un exemplaire de l'équipement ainsi dimensionné et l'établissement d'une deuxième spécification selon le procédé d'établissement précédemment décrit, la détermination de l'accélération de dimensionnement de la deuxième spécification étant réalisée au moyen de capteurs, lors d'un essai réel dudit incident sur la structure sur laquelle est montée ledit exemplaire. La deuxième spécification peut être utilisée par la suite pour ajuster le dimensionnement de l'équipement compte tenu de la réponse réelle de l'exemplaire fabriqué au choc. Cet ajustement peut être réalisé en redimensionnant l'équipement selon le procédé de dimensionnement précédemment décrit, en remplaçant la première spécification par la deuxième spécification. L'établissement de la deuxième spécification est normalement plus précis que celui de la première spécification dans la mesure où la dynamique de la structure telle que mesurée par les capteurs, typiquement des accéléromètres, prend nécessairement en compte la présence de l'équipement avec sa masse et ses autres caractéristiques physiques, ce qui pouvait être négligé lors de la détermination de l'accélération de dimensionnement par simulation numérique pour la première spécification.

La fabrication de l'équipement comme décrite ci-dessus peut être réalisée par un équipementier et lui permet, pour les raisons indiquées précédemment, de dimensionner au plus juste sont équipement, éventuellement en choisissant le point d'attache le plus favorable. En effet, dans certains modes de réalisation, les accélérations de la spécification peuvent dépendre en outre de la position axiale et/ou radiale du point d'attache de l'équipement sur la structure.

Dans certains modes de réalisation, le dimensionnement comprend une décomposition modale de l'équipement, optionnellement par la méthode des éléments finis, un calcul, pour au moins un mode propre de l'équipement, d'un champ de contraintes maximales dans l'équipement en réponse aux accélérations de dimensionnement et en fonction de la spécification, et l'adaptation de l'équipement pour résister audit champ de contraintes maximales. Alternativement, dans certains cas, le dimensionnement peut être réalisé de manière analytique, par calcul.

Dans certains modes de réalisation, le calcul est effectué pour chaque mode propre de l'équipement dans une plage spectrale prédéterminée.

Dans certains modes de réalisation, les différentes étapes du procédé d'établissement d'une spécification sont déterminées par des instructions de programme d'ordinateur. En conséquent, le présent exposé concerne également un programme comportant des instructions pour l'exécution des étapes du procédé d'établissement d'une spécification précédemment décrit lorsque ledit programme est exécuté par un ordinateur ou par un microprocesseur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le présent exposé concerne également un support d'enregistrement lisible par un ordinateur sur lequel est enregistré un programme d'ordinateur comprenant des instructions pour l'exécution des étapes du procédé d'établissement d'une spécification précédemment décrit.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Le présent exposé concerne également un procédé d'assemblage, comprenant l'obtention d'une structure de turbomachine et d'un équipement obtenu par le procédé de fabrication d'un équipement tel que précédemment décrit, et l'assemblage de l'équipement sur ladite structure.

## BRÈVE DESCRIPTION DES DESSINS

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :

- la figure 1 représente schématiquement, partiellement et en perspective, une turbomachine selon un mode de réalisation ;
- la figure 2 est un schéma-bloc représentant les étapes d'un procédé d'établissement, de dimensionnement, de fabrication selon un mode de réalisation ;
- la figure 3 représente schématiquement un oscillateur mécanique selon un mode de réalisation ;
- la figure 4 est un graphe illustrant une spécification de dimensionnement selon un mode de réalisation ;
- la figure 5 représente schématiquement un dispositif d'établissement d'une spécification de dimensionnement selon un mode de réalisation.

DESCRIPTION DÉTAILLÉE DE L'INVENTION

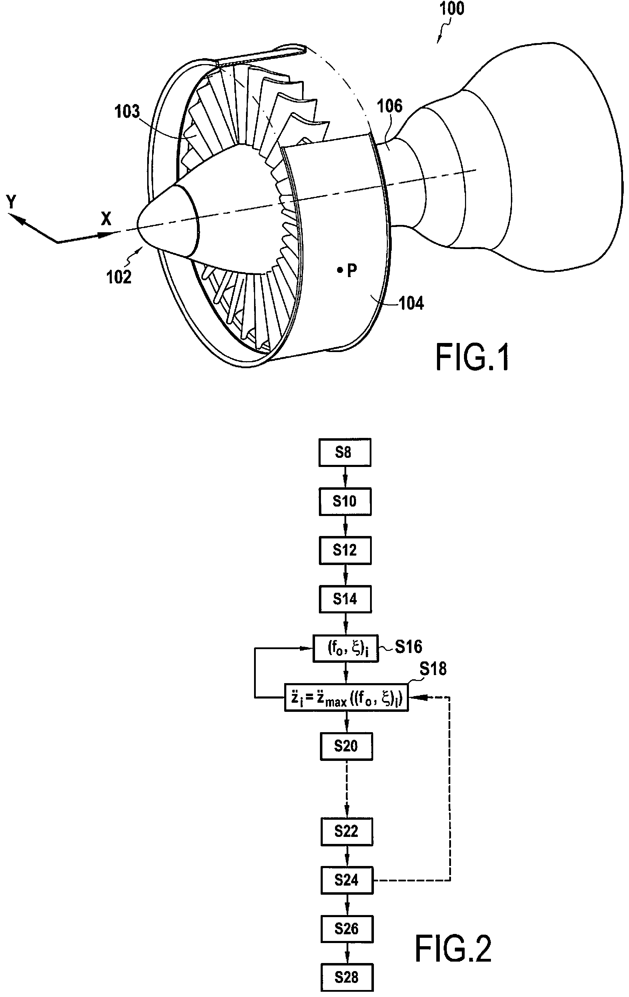

Comme indiqué précédemment, le présent exposé concerne l'établissement d'une spécification de dimensionnement d'un équipement destiné à être monté sur une structure de turbomachine telle que celle représentée schématiquement sur la figure 1. La turbomachine 100 de la figure 1 comprend notamment un rotor 102 ayant un aubage de soufflante 103, un carter de soufflante 104 entourant l'aubage de soufflante 103 et un carter intermédiaire 106 situé axialement en aval du carter de soufflante 104. La turbomachine présente une direction axiale X qui est l'axe de rotation du rotor 102, et une direction radiale Y. Par la suite, sans perte de généralité, on prendra le carter de soufflante 104 comme exemple de structure de turbomachine sur laquelle un équipement est destiné à être monté. Plus généralement, la structure considérée peut être une structure par rapport à laquelle le rotor 102 est en rotation et/ou une structure annulaire autour de tout ou partie, axialement ou circonférentiellement, du rotor 102. Le rotor 102 est susceptible, au cours de sa rotation, de perdre un de ses éléments.

L'équipement peut être, à titre d'exemple, une canalisation, notamment rigide, un support de canalisation, un support de harnais, un support, un réservoir d'huile, un régulateur électronique du moteur, un boîtier électronique, un doseur de carburant, une pompe, un échangeur thermique, etc. L'équipement peut être monté radialement à l'intérieur ou, de préférence, à l'extérieur de la structure de turbomachine formée ici par le carter de soufflante 104.

La figure 2 représente, sous forme de schéma bloc, plusieurs étapes d'un procédé d'établissement d'une spécification de dimensionnement, de dimensionnement et de fabrication d'un équipement destiné à être monté sur la turbomachine 100.

Afin d'assurer la robustesse de la turbomachine 100, l'équipe en charge de la dynamique d'ensemble, par exemple un motoriste, doit fournir à l'équipementier une spécification de dimensionnement pour l'équipement considéré. Cette spécification de dimensionnement doit être exprimée dans un langage commun, c'est-à-dire que l'information qu'elle contient doit se trouver sous une forme que le motoriste est capable d'exprimer et que l'équipementier est capable d'exploiter, tout en restant aussi précise, complète et concise que possible.

En particulier, le motoriste doit fournir à l'équipementier des informations sur les incidents auquel l'équipement doit résister. Dans l'exemple de la turbomachine 100, l'incident le plus sévère pour un équipement monté sur le carter de soufflante 104 est une perte d'aube de l'aubage de soufflante 103. En effet, une telle perte d'aube induirait tout d'abord une phase de choc due à l'impact de l'aube sur le carter de soufflante 104 (au-delà de 1000 g sur une durée inférieure ou égale à trois millisecondes, g étant l'accélération de la pesanteur terrestre), puis une phase durant laquelle les équipements montés sur le carter de soufflante 104 sont excités par une force de balourd vibrant à la fréquence de rotation du rotor 102 et due au déséquilibre résultant de la perte de l'aube. Ainsi, plus généralement, l'incident auquel est soumis le carter de soufflante 104 peut comprendre un choc et/ou une excitation sous balourd tournant.

Ainsi, lors d'une étape S8, le motoriste sélectionne au moins un incident susceptible de se produire sur la structure. Dans le cadre du présent exposé, l'incident sera un choc sur le carter de soufflante 104, due à la perte d'une aube de la soufflante. Toutefois, le motoriste pourrait sélectionner un autre incident ou des incidents supplémentaires, par exemple une perte d'aube de la turbine haute pression, ou bien le mode découplé qui, pour des moteurs équipés de booster à découpleur tels que divulgués notamment dans les documents de brevet FR 2 845 126 et FR 2 976 623, suit le choc de l'aube sur le carter dans l'accident de perte d'aube de soufflante.

Au cas où la détermination d'accélérations de dimensionnement est réalisée par simulation numérique (comme il sera détaillé ci-après), le procédé peut comprendre une étape S10 de modélisation du carter de soufflante 104. La modélisation peut être réalisée au moyen d'éléments finis ou d'une autre méthode connue en soi de l'homme du métier. Alternativement, il est possible, à l'étape S10, d'obtenir un modèle de structure préalablement réalisé.

Optionnellement, à l'étape S12, la structure modélisée peut-être divisée ou partitionnée en une pluralité de zones. Une partition désigne une division particulière recouvrant l'ensemble de la structure et telle qu'aucune zone ne chevauche une autre zone. Une zone peut correspondre à une portion annulaire de la structure. Deux zones peuvent également être séparées radialement, par exemple lorsqu'on se pose la question de monter un équipement à l'intérieur ou à l'extérieur du carter de soufflante 104.

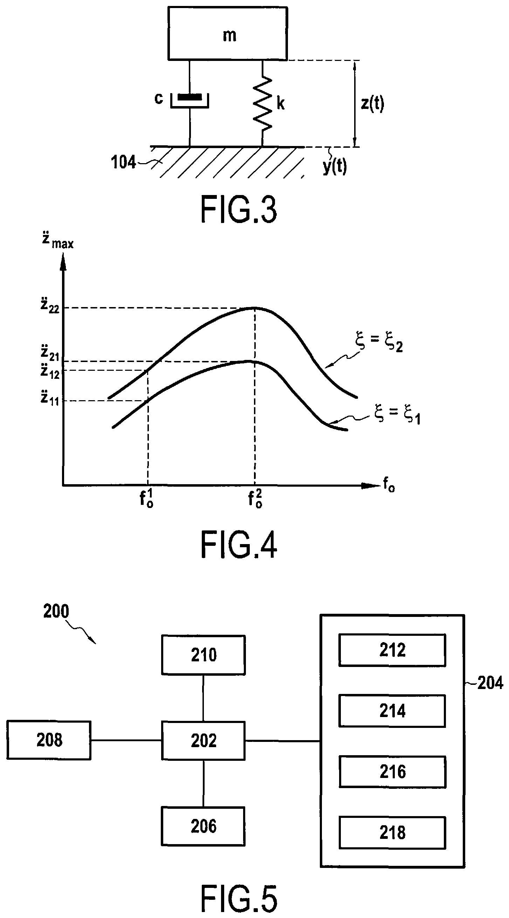

À l'étape S14, on simule la présence de l'équipement sur la structure en au moins un point d'attache P (voir figure 1), au moyen d'un oscillateur mécanique 108. L'oscillateur mécanique a au moins une fréquence propre et au moins un taux d'amortissement. Par exemple, l'oscillateur mécanique 108 peut être du type représenté sur la figure 3. Comme illustré sur la figure 3, le point d'attache P peut être l'unique point d'attache de l'équipement, c'est-à-dire que l'équipement est libre de toute autre attache mécaniquement contraignante lors de l'incident et n'a pas d'autre attache à un autre composant que la structure 104 ; ainsi, d'un point de vue mécanique, l'équipement est « en bout de chaîne ». Par ailleurs, la figure 3 représente une masse m, supposée ponctuelle, reliée à un support, ici la structure, par un ressort de raideur k et un amortisseur de coefficient d'amortissement c. En l'espèce, l'oscillateur mécanique 108 est un oscillateur harmonique amorti. La masse m est repérée par sa position z(t) par rapport à sa position de repos. De manière classique, l'équation de ce mouvement peut être réduite sous la forme :

$$\ddot{z}(t) + 2\xi\omega_0\dot{z}(t) + \omega_0^2 z(t) = -\ddot{y}(t)$$ , où $\dot{z}$

est la dérivée première de z par rapport au temps, c'est-à-dire la vitesse de la masse m, et $\ddot{z}$ est la dérivée seconde de z par rapport au temps, c'est-à-dire l'accélération de la masse m, les constantes $\omega_0$ et $\xi$, qui sont respectivement la pulsation propre et le taux d'amortissement de l'oscillateur mécanique 108, sont définies en fonction des grandeurs m, k et c, et $\ddot{y}$ est l'accélération du carter de soufflante 104 au point d'attache P. Ainsi, l'oscillateur mécanique 108 possède une fréquence propre $f_0$, reliée à la pulsation propre par la relation $\omega_0 = 2\pi f_0$, et un taux d'amortissement $\xi$. En outre, il suffit de la donnée de ces deux grandeurs pour définir l'oscillateur mécanique 108, il n'est pas nécessaire de définir explicitement une masse m, une raideur k et un coefficient d'amortissement c. On note par ailleurs que l'équation ci-dessus est linéaire, ce qui simplifie les calculs et rend la méthode plus rapide à mettre en œuvre.

Dans ce mode de réalisation, l'oscillateur mécanique 108 est unidirectionnel, c'est-à-dire qu'il possède un seul degré de liberté. Cela se justifie par le fait que, dans le cas présent, l'incident entraîne une sollicitation essentiellement radiale de la structure (du carter de soufflante 104), et les efforts sur l'équipement seront essentiellement radiaux. Ainsi, on ne s'intéresse qu'à l'accélération radiale de l'équipement, donc qu'à l'accélération radiale $\dot{z}$ de l'oscillateur mécanique 108. Toutefois, il est possible de considérer un oscillateur mécanique multidirectionnel et de prendre en compte le mouvement de la masse m selon plusieurs directions, par exemple non seulement la direction radiale mais aussi les directions axiale et tangentielle.

La présence de l'oscillateur mécanique 108 est prise en compte en résolvant l'équation différentielle ci-dessus. On connaît une solution analytique de cette équation et la résolution de ce problème est à la portée de l'homme du métier. Toutefois, on notera que les accélérations $\ddot{y}(t)$, qui nécessitent d'avoir obtenu par mesure ou simulation la réponse dynamique du carter en réponse au choc, étant généralement disponibles sous forme discrète et non continue, il est nécessaire d'utiliser une discrétisation. Dans la discrétisation, afin d'économiser du temps de calcul, il peut être avantageux d'utiliser un pas de temps variable, notamment dès la discrétisation de l'excitation $\ddot{y}$.

A l'étape S16, on fait varier la fréquence propre $f_0$ et/ou le taux d'amortissement $\xi$ selon au moins deux valeurs. Selon un exemple, le taux d'amortissement peut varier entre 1% et 20%, voire jusqu'à 50%, en fonction, notamment, du matériau de la structure. La variation de la fréquence propre et/ou du taux d'amortissement peut correspondre, pour l'équipementier, à envisager deux conceptions différentes pour l'équipement considéré, puisqu'un changement de fréquence propre et/ou de coefficient d'amortissement change, implicitement, la masse, la raideur et/ou le coefficient d'amortissement de l'équipement. On se donne ainsi au moins deux couples de valeurs $(f_0, \xi)_i$, au moins l'une des valeurs variant pour chaque indice i.

Pour chacun de ces couples de valeurs, à l'étape S18, on détermine une accélération de dimensionnement de l'oscillateur mécanique 108 au point d'attache P. Par exemple, à l'aide d'une simulation numérique, on soumet la structure modélisée et l'oscillateur mécanique 108 à l'incident sélectionné, et on en déduit l'accélération maximale $\ddot{z}_{max}$. L'incident sélectionné peut être modélisé comme un demi-sinus, c'est-à-dire une fonction sinus sur une demi-période, de signe constant représentant le choc de l'aube de soufflante 103 sur le carter de soufflante 104, donc l'accélération $\ddot{y}$ du carter de soufflante 104 au point du choc.

Dans ce mode de réalisation, afin de conserver une certaine marge de sécurité, on prend comme accélération de dimensionnement l'accélération radiale maximale $\ddot{z}_{max}$ augmentée d'une marge prédéterminée. La marge peut être prise sous la forme d'un coefficient additif et/ou multiplicatif.

Comme illustré sur la figure 2, on itère l'étape S18 pour chaque couple de valeurs $(f_0, \xi)_i$. On obtient ainsi un graphe du type de celui représenté sur la figure 4, et présentant, pour chaque fréquence propre et chaque taux d'amortissement (ici deux fréquences propres $f_0^1$, $f_0^2$ et deux taux d'amortissement $\xi^1$, $\xi^2$), l'accélération de dimensionnement $\ddot{z}_{dim}$ correspondante. Si davantage de valeurs sont étudiées, il est possible d'obtenir des courbes telles que celles illustrées sur la figure 4. En outre, ces données peuvent également faire l'objet d'une représentation en trois dimensions, par exemple sous forme de nappe surfacique. La courbe représentant l'accélération de dimensionnement en fonction de la fréquence propre est parfois appelée réponse spectrale. En outre, il est possible d'obtenir le graphe de la figure 4 pour plusieurs des zones précédemment définies, ou pour plusieurs points d'attache, lorsque plusieurs positions sont envisagées pour monter l'équipement sur la structure, notamment plusieurs positions axiales ou radiales.

Ayant obtenu ce résultat, le motoriste peut délivrer à l'équipementier, à l'étape S20, une spécification comprenant les accélérations de dimensionnement et les valeurs de fréquence propre et de coefficient d'amortissement correspondantes. Par exemple, la spécification peut comprendre le tableau de valeurs servant de base à la représentation graphique de la figure 4, et/ou cette représentation graphique. Lorsque le motoriste a étudié plusieurs incidents, la spécification délivrée peut comprendre, pour chaque fréquence propre et chaque taux d'amortissement, l'accélération de dimensionnement maximale pour tous les incidents étudiés.

De son côté, à l'étape S22, l'équipementier obtient une spécification comprenant des accélérations de dimensionnement auxquelles pourra être soumis l'équipement, en fonction d'au moins une valeur de fréquence propre et d'au moins une valeur de coefficient d'amortissement dudit équipement. La spécification obtenue à l'étape S22 peut être celle délivrée à l'étape S20 par le motoriste, comme illustré sur la figure 2.

Muni de cette spécification, l'équipementier peut dimensionner l'équipement (étape S24). La spécification est enrichie par rapport à ce qui était disponible dans l'état de la technique : au lieu de ne disposer que de l'accélération maximale de la structure, qui est une condition aux limites, l'équipementier dispose maintenant de l'accélération de dimensionnement de l'équipement lui-même, et ce pour plusieurs valeurs de la fréquence propre et du taux d'amortissement. L'équipementier peut donc concevoir l'équipement, calculer sa fréquence propre et son amortissement, vérifier que l'équipement résiste suffisamment à l'accélération de dimensionnement issue de la spécification pour cette fréquence propre et cet amortissement, et ajuster de manière itérative la conception de son équipement en fonction de cette vérification.

Dans la pratique, les systèmes réels ont rarement un seul mode propre. Toutefois, il est possible de se ramener à des oscillateurs à un seul degré de liberté, par exemple en utilisant la méthode dite de la décomposition modale. Dans cette méthode, on calcule les différents modes propres de l'équipement et on obtient autant de fréquences propres correspondantes. Alors, l'utilisation de la spécification de dimensionnement permet d'obtenir, pour chaque fréquence propre et/ou taux d'amortissement, l'accélération de dimensionnement liée à ce mode propre. Une estimation de la réponse maximale de l'équipement peut ensuite être obtenue en effectuant une approximation qui consiste à sommer la réponse maximale de chacun des modes. Par exemple, pour une mise en œuvre utilisant les éléments finis, cette approximation est, en chaque nœud j, de la forme :

$$z_{j,dim} \cong \sqrt{\sum_{i=1}^{N} (\phi_{ij} \eta_{i\ dim})^2}$$

où $z_{j,dim}$ est le déplacement de dimensionnement au nœud j de l'équipement, $\eta_{i\ dim}$ est le déplacement de dimensionnement pour le couple de valeurs $(f_0, \xi)_i$ obtenu à partir de la spécification de dimensionnement, et $\phi_{ij}$ est la composante du mode propre i au nœud j. La donnée des déplacements de dimensionnement, supérieurs par définition aux déplacements maximaux, permet de remonter aux contraintes maximales dans l'équipement avec la marge souhaitée.

Par ailleurs, il existe d'autres approximations permettant de déterminer le déplacement de dimensionnement $z_{j,dim}$ à partir des déplacements de dimensionnement $\eta_{i\ dim}$ de chaque mode propre. De plus, par analogie, il est possible de sommer non seulement les contributions des différentes modes propres, mais aussi les contributions des différentes directions dans lesquelles la sollicitation de l'incident s'applique.

En tout état de cause, on note qu'une telle méthode ne nécessite qu'un seul calcul d'éléments finis, qui est la décomposition modale de l'équipement. Un tel procédé permet donc de prendre en compte des données de dimensionnement dynamique, provenant de la spécification de dimensionnement, avec un temps de calcul réduit.

Ainsi, de manière plus générale, le dimensionnement de l'équipement comprend une décomposition modale de l'équipement, optionnellement par la méthode des éléments finis, un calcul, pour au moins un mode propre de l'équipement, d'un champ de contraintes maximales dans l'équipement en réponse aux accélérations de dimensionnement et en fonction de la spécification, et l'adaptation de l'équipement pour résister audit champ de contraintes maximales. Le calcul du champ de contraintes peut être effectué pour chaque mode propre dans une plage spectrale prédéterminée, ce par quoi on limite les calculs aux modes propres déterminants et/ou réellement susceptibles d'être sollicités compte tenu de la nature de l'incident étudié.

Du fait des contraintes exigeantes dans le domaine de l'aéronautique, l'équipementier peut, après avoir dimensionné son équipement à l'étape S24, fournir le résultat de cette conception au motoriste qui peut, sur cette base, calculer de nouvelles accélérations de dimensionnement prenant en compte l'équipement de manière plus précise. Comme indiqué précédemment, l'obtention d'une deuxième spécification de dimensionnement (étape S18) peut être réalisée sur la base d'une simulation numérique, mais de préférence sur la base de tests physiques (essais réels) dans lesquels un exemplaire de l'équipement est monté sur la structure. Le procédé peut ensuite se poursuivre comme précédemment exposé.

L'équipementier peut aussi demander au motoriste des compléments de spécification, par exemple sur certaines plages de fréquences propres ou de taux d'amortissement.

Une fois le dimensionnement terminé, l'équipement peut être fabriqué (S26) puis assemblé à la structure (S28) au point d'attache sélectionné.

Le procédé d'établissement d'une spécification de dimensionnement peut être mis en œuvre à l'aide d'un dispositif d'établissement d'une spécification de dimensionnement (ci-après dispositif d'établissement), dont un mode de réalisation est représenté sur la figure 5.

Le dispositif d'établissement 200 dispose ici de l'architecture matérielle d'un ordinateur. Il comporte notamment un processeur 202, une mémoire morte 204, une mémoire vive 206, une mémoire non volatile 208 et des moyens de communication 210, par exemple une interface utilisateur pour la saisie des paramètres tels que les plages de variation de la fréquence propre et/ou du taux d'amortissement.

La mémoire morte 204 du dispositif d'estimation 200 constitue un support d'enregistrement, lisible par le processeur 202 et sur lequel est enregistré un programme d'ordinateur, comportant des instructions pour l'exécution des étapes d'un procédé d'établissement d'une spécification de dimensionnement tel que précédemment décrit en référence à la figure 2.

Ce programme d'ordinateur définit, de façon équivalente, des modules fonctionnels du dispositif 200 d'estimation aptes à mettre en œuvre les étapes du procédé d'estimation selon l'invention. Ainsi, notamment, ce programme d'ordinateur définit un module de sélection 212 d'un incident susceptible de se produire sur la structure, tel que la perte d'un élément de rotor de la turbomachine; un module 214 de simulation de la présence de l'équipement sur la structure, en un point d'attache, au moyen d'un oscillateur mécanique ayant au moins une fréquence propre et au moins un coefficient d'amortissement ; un module 216 de variation configuré pour faire varier la fréquence propre et/ou le coefficient d'amortissement selon au moins deux valeurs ; un module 218 de détermination d'une accélération de dimensionnement de l'oscillateur mécanique en réponse au choc pour chacune desdites valeurs de la fréquence propre et du coefficient d'amortissement, le module 218 de détermination étant configuré pour délivrer la spécification comprenant les accélérations de dimensionnement et les valeurs de fréquence propre et de coefficient d'amortissement correspondantes.

Bien que la présente invention ait été décrite en se référant à des exemples de réalisation spécifiques, des modifications peuvent être apportées à ces exemples sans sortir de la portée générale de l'invention telle que définie par les revendications. Par exemple, un mode de réalisation a été présenté en relation avec un motoriste et un équipementier. Toutefois, l'équipe responsable de la dynamique d'ensemble et l'équipe responsable du dimensionnement de l'équipement peuvent travailler au sein d'une même structure. En outre, bien que le procédé d'établissement d'une spécification ait été présenté dans un certain ordre, certaines étapes de ce procédé pourraient être interverties sans que cela ne nuise à la mise en œuvre du procédé. Par ailleurs, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

**Revendications**

1. Procédé de fabrication d'un équipement destiné à être monté sur une structure de turbomachine telle qu'un carter, comprenant :

    - l'obtention (S22) d'une spécification par un procédé d'établissement d'une spécification de dimensionnement d'un équipement destiné à être monté sur une structure de turbomachine telle qu'un carter (104), le procédé d'établissement comprenant les étapes suivantes :

    - sélectionner (S8) un incident susceptible de se produire sur la structure (104), tel que la perte d'un élément de rotor (102) de la turbomachine, l'incident comprenant un choc sur la structure (104) ;
    - simuler (S14) la présence de l'équipement sur la structure, en un point d'attache (P), au moyen d'un oscillateur mécanique (108) ayant au moins une fréquence propre ($f_0$) et au moins un taux d'amortissement ($\xi$) ;
    - faire varier (S16) la fréquence propre et/ou le taux d'amortissement selon au moins deux valeurs ;
    - déterminer (S18) une accélération de dimensionnement de l'oscillateur mécanique (108) en réponse au choc sur la structure (104) pour chacune desdites valeurs de la fréquence propre et du taux d'amortissement ;
    - délivrer (S20) la spécification comprenant les accélérations de dimensionnement et les valeurs de fréquence propre et de taux d'amortissement correspondantes ;

le procédé de fabrication comprenant en outre :

    - le dimensionnement (S24) de l'équipement en fonction de la dite spécification ;
    - la fabrication (S26) de l'équipement ainsi dimensionné.

2. Procédé de fabrication d'un équipement selon la revendication 1, dans lequel la détermination de l'accélération de dimensionnement (S18) est réalisée par simulation numérique.

3. Procédé de fabrication d'un équipement selon la revendication 1 ou 2, dans lequel, avant la détermination des accélérations de dimensionnement (S18), la structure est partitionnée en une pluralité de zones (S12) et le procédé comprend la détermination des accélérations de dimensionnement dans au moins deux zones de ladite pluralité.

4. Procédé de fabrication d'un équipement selon l'une quelconque des revendications 1 à 3, dans lequel l'accélération de dimensionnement est une accélération maximale de l'oscillateur, prise sur tous les azimuts possibles du point d'attache, en réponse au choc sur la structure (104), éventuellement augmentée d'une marge prédéterminée.

5. Procédé de fabrication d'un équipement selon l'une quelconque des revendications 1 à 4, dans lequel l'accélération de dimensionnement ou l'accélération maximale est une accélération radiale.

6. Procédé de fabrication d'un équipement selon l'une quelconque des revendications 1 à 5, dans lequel la masse de l'équipement est inférieure ou égale à 5% de la masse de la structure (104).

7. Procédé de fabrication d'un équipement selon l'une quelconque des revendications 1 à 6, dans lequel la masse de l'équipement est suffisamment faible pour que quelle que soit sa fréquence propre, l'accélération au point d'attache (P) ne diffère pas de plus de 10% entre le cas où l'équipement est présent et le cas où l'équipement est absent.

8. Procédé de fabrication d'un équipement selon l'une quelconque des revendications 1 à 7, dans lequel, avant de déterminer (S18) une accélération de dimensionnement de l'oscillateur mécanique (108) en réponse à l'incident, on obtient la réponse dynamique ($\ddot{y}(t)$) de la structure (104) en réponse au choc sur la structure (104).

9. Procédé de fabrication d'un équipement selon l'une quelconque des revendications 1 à 8, dans lequel le dimensionnement comprend une décomposition modale de l'équipement, optionnellement par la méthode des éléments finis, un calcul, pour au moins un mode propre de l'équipement, d'un champ de contraintes maximales dans l'équipement en réponse aux accélérations de dimensionnement et en fonction de la spécification, et l'adaptation de l'équipement pour résister audit champ de contraintes maximales.

10. Procédé d'assemblage, comprenant l'obtention d'une structure de turbomachine (104) et d'un équipement obtenu par le procédé de fabrication d'un équipement selon l'une quelconque des revendications 1 à 9, et l'assemblage de l'équipement sur ladite structure (S28).

**Patentansprüche**

1. Herstellungsverfahren einer Ausrüstung, die dazu bestimmt ist, an einer Strömungsmaschinenstruktur, wie beispielsweise einem Gehäuse, montiert zu werden, umfassend:

- das Erlangen (S22) einer Spezifikation durch ein Verfahren zum Erstellen einer Auslegungsspezifikation einer Ausrüstung, die dazu bestimmt ist, an einer Strömungsmaschinenstruktur, wie beispielsweise einem Gehäuse (104) montiert zu werden, das Erstellungsverfahren umfassend die folgenden Schritte:

- Auswählen (S8) eines Ereignisses, das an der Struktur (104) auftreten kann, wie beispielsweise der Verlust eines Rotorelements (102) der Strömungsmaschine, das Ereignis umfassend einen Aufprall auf die Struktur (104);
- Simulieren (S14) der Anwesenheit der Ausrüstung auf der Struktur, an einem Anbringungspunkt (P), mittels eines mechanischen Oszillators (108), der mindestens eine Eigenfrequenz ($f_0$) und mindestens eine Dämpfungsrate ($\xi$) aufweist;
- Variieren (S16) der Eigenfrequenz und/oder der Dämpfungsrate um mindestens zwei Werte;
- Bestimmen (S18) einer Auslegungsbeschleunigung des mechanischen Oszillators (108) als Reaktion auf den Aufprall auf die Struktur (104) für jeden der Werte der Eigenfrequenz und der Dämpfungsrate;
- Liefern (S20) der Spezifikation, umfassend die Auslegungsbeschleunigungen und die entsprechenden Werte der Eigenfrequenz und der Dämpfungsrate;

das Herstellungsverfahren ferner umfassend:

- das Auslegen (S24) der Ausrüstung gemäß der Spezifikation;
- das Herstellen (S26) der somit ausgelegten Ausrüstung.

2. Herstellungsverfahren einer Ausrüstung nach Anspruch 1, wobei das Bestimmen der Auslegungsbeschleunigung (S18) durch numerische Simulation erfolgt.

3. Herstellungsverfahren einer Ausrüstung nach Anspruch 1 oder 2, wobei die Struktur vor dem Bestimmen der Auslegungsbeschleunigungen (S18) in eine Vielzahl von Zonen (S12) partitioniert wird und das Verfahren das Bestimmen der Auslegungsbeschleunigungen in mindestens zwei Zonen der Vielzahl umfasst.

4. Herstellungsverfahren einer Ausrüstung nach einem der Ansprüche 1 bis 3, wobei die Auslegungsbeschleunigung eine maximale Beschleunigung des Oszillators ist, die über alle möglichen Azimute des Befestigungspunkts als Reaktion auf den Aufprall auf die Struktur (104) genommen wird, optional erhöht um eine vorbestimmte Spanne.

5. Herstellungsverfahren einer Ausrüstung nach einem der Ansprüche 1 bis 4, wobei die Auslegungsbeschleunigung oder die maximale Beschleunigung eine radiale Beschleunigung ist.

6. Herstellungsverfahren einer Ausrüstung nach einem der Ansprüche 1 bis 5, wobei die Masse der Ausrüstung weniger als oder gleich wie 5 % der Masse der Struktur (104) ist.

7. Herstellungsverfahren einer Ausrüstung nach einem der Ansprüche 1 bis 6, wobei die Masse der Ausrüstung ausreichend gering ist, damit die Beschleunigung an dem Anbringungspunkt (P) zwischen dem Fall, in dem die Ausrüstung vorhanden ist, und dem Fall, in dem die Ausrüstung nicht vorhanden ist, unabhängig von ihrer Eigenfrequenz um nicht mehr als 10 % abweicht.

8. Herstellungsverfahren einer Ausrüstung nach einem der Ansprüche 1 bis 7, wobei vor einem Bestimmen (S18) einer Auslegungsbeschleunigung des mechanischen Oszillators (108) als Reaktion auf das Ereignis die dynamische Antwort ($\ddot{y}$(t)) der Struktur (104) als Reaktion auf den Aufprall auf die Struktur (104) erlangt wird.

9. Herstellungsverfahren einer Ausrüstung nach einem der Ansprüche 1 bis 8, wobei die Auslegung eine modale Zerlegung der Ausrüstung, optional durch die Methode finiter Elemente, eine Berechnung, für mindestens einen Eigenmodus der Ausrüstung, eines maximalen Spannungsfelds in der Ausrüstung als Reaktion auf die Auslegungsbeschleunigungen und abhängig von der Spezifikation, und die Anpassung der Ausrüstung, um dem genannten maximalen Belastungsfeld standzuhalten, umfasst.

10. Montageverfahren, umfassend das Erlangen einer Strömungsmaschinenstruktur (104) und einer Ausrüstung, die durch das Herstellungsverfahren einer Ausrüstung nach einem der Ansprüche 1 bis 9 erlangt wird, und das Montieren der Ausrüstung an der Struktur (S28).

**Claims**

1. **A method** for manufacturing an equipment intended to be mounted on a turbomachine structure such as a casing, comprising:

   - obtaining (S22) a specification by a method for establishing a sizing specification for an equipment intended to be mounted on a turbomachine structure such as a casing (104), the method for establishing comprising the following steps:

      - selecting (S8) an incident likely to occur on the structure (104), such as the loss of a rotor element (102) of the turbomachine, the incident comprising a shock on the structure (104);
      - simulating (S14) the presence of the equipment on the structure, at an attachment point (P), by means of a mechanical oscillator (108) having at least one natural frequency ($f_0$) and at least one damping rate ($\xi$);
      - varying (S16) the natural frequency and/or the damping rate according to at least two values;
      - determining (S18) a sizing acceleration for the mechanical oscillator (108) in response to the shock on the structure (104) for each of said values of the natural frequency and damping rate;
      - delivering (S20) the specification comprising the sizing accelerations and the corresponding natural frequency and damping rate values;

   the method for manufacturing further comprising:

      - sizing (S24) the equipment based on said specification;
      - manufacturing (S26) the equipment thus sized.

2. The method for manufacturing an equipment according to claim 1, wherein the determination of the sizing acceleration (S18) is carried out by digital simulation.

3. The method for manufacturing an equipment according to claim 1 or 2, wherein, before determining the sizing accelerations (S18), the structure is partitioned into a plurality of areas (S12) and the method comprises determining the sizing accelerations in at least two areas of said plurality.

4. The method for manufacturing an equipment according to any one of claims 1 to 3, wherein the sizing acceleration is a maximum acceleration of the oscillator, taken on all possible azimuths of the attachment point, in response to the shock on the structure (104), possibly increased by a predetermined margin.

5. **The method** for manufacturing an equipment according to any one of claims 1 to 4, wherein the sizing acceleration or the maximum acceleration is a radial acceleration.

6. The method for manufacturing an equipment according to any one of claims 1 to 5, wherein the mass of the equipment is less than or equal to 5% of the mass of the structure (104).

7. The method for manufacturing an equipment according to any one of claims 1 to 6, wherein the mass of the equipment is low enough such that, whatever its natural frequency, the acceleration at the attachment point (P) does not differ by more than 10% between the case where the equipment is present and the case where the equipment is absent.

8. The method for manufacturing an equipment according to any one of claims 1 to 7, wherein, before determining (S18) a sizing acceleration for the mechanical oscillator (108) in response to the incident, the dynamic response ($\ddot{y}(t)$) of the structure (104) in response to the shock on the structure (104) is obtained..

9. The method for manufacturing an equipment according to claim 8, wherein the sizing comprises a modal decomposition of the equipment, optionally by the finite element method, a calculation, for at least one natural mode of the equipment, of a field of maximum stresses in the equipment in response to the sizing accelerations and according to the specification, and the adaptation of the equipment to withstand said field of maximum stresses.

10. An assembly method, comprising obtaining a turbomachine structure (104) and an equipment obtained by the equipment manufacturing method according to any one of claims 1 to 9, and assembling the equipment on said structure (S28).

**FIG.1**

$$(f_o, \xi)_i \quad \text{S16}$$

$$\ddot{z}_i = \ddot{z}_{max}((f_o, \xi)_i) \quad \text{S18}$$

**FIG.2**

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2845126

- FR 2976623

**Littérature non-brevet citée dans la description**

- **W. SHERIDAN et al.** Design optimization study of isolation mount systems for gas turbine engine accessories. *Proceedings of GT2005, ASME Turbo expo*, 2005

- **RENO-TAHOE**. *Power for land, sea and air*, 06 June 2005, 361-371